# EUROPEAN PATENT SPECIFICATION

(11) **EP 4 090 214 B1**
(45) Date of publication and mention of the grant of the patent: **31.12.2025**
(21) Application number: 20913362.8
(22) Date of filing: 14.10.2020
(51) Int. Cl.: A47L 9/28, A47L 5/24, A47L 11/40

(54) **ROBOT CLEANER AND METHOD FOR CONTROLLING THE SAME**
REINIGUNGSROBOTER UND VERFAHREN ZUR STEUERUNG DAVON
ROBOT NETTOYEUR ET SON PROCÉDÉ DE COMMANDE

(30) Priority: 14.01.2020 KR 20200004638
(43) Date of publication of application: 23.11.2022
(73) Proprietor: LG ELECTRONICS INC., Yeongdeungpo-Gu Seoul 07336 (KR)
(72) Inventor: KWAK, Donghoon, Seoul 08592 (KR); KO, Jaehwan, Seoul 08592 (KR); KWEON, Hyukdo, Seoul 08592 (KR)
(74) Representative: Vossius & Partner Patentanwälte Rechtsanwälte mbB
(86) International application number: PCT/KR2020/013985
(87) International publication number: WO 2021/145536

(56) References cited:
- JP-A- 2018 143 715
- KR-A- 20170 070 607
- KR-A- 20180 015 928
- KR-A- 20190 134 970
- KR-B1- 102 021 833
- US-A1- 2018 360 282

## Description

### Technical Field

The present disclosure relates to a robot cleaner and a method for controlling the same, and more particularly, to a robot cleaner and a method for controlling the same that may perform additional cleaning in consideration of a cleaning operation of a user.

### Background Art

In general, a cleaner includes a main body having a suction apparatus and a dust container, and a cleaning nozzle connected to the main body to perform cleaning in a state close to a face to be cleaned. The cleaner is divided into a manual cleaner for a user to directly and manually clean the face to be cleaned and a robot cleaner for cleaning the face to be cleaned while the main body travels by itself.

When the user puts the cleaning nozzle on the face to be cleaned while holding the cleaning nozzle or the main body by hand in a state in which the suction apparatus has generated a suction force by a driving force of an electric motor, the cleaning nozzle sucks a foreign substance including dust on the face to be cleaned by the suction force and the sucked foreign substance is collected in the dust container, so that the manual cleaner performs the cleaning of the face to be cleaned. The user may perform the cleaning by adjusting the suction force of the suction apparatus.

In addition, in the robot cleaner, an ultrasonic body and/or a camera sensor, and the like are further installed on the main body equipped with the suction apparatus and the dust container. As the main body automatically travels around the face to be cleaned, the cleaning nozzle sucks the foreign substance on the face to be cleaned by the suction force generated by the suction apparatus and the sucked foreign substance is collected in the dust container, so that the cleaning of the face to be cleaned is performed.

As a prior art, Korean Patent Application Publication No. 20110063285A discloses an operation scheme of a robot cleaner, but the robot cleaner does not perform cleaning in consideration of a user's cleaning pattern or user characteristics.

The user adjusts a suction level and performs the cleaning while moving the manual cleaner based on a propensity. However, the robot cleaner does not perform the cleaning by reflecting the user's cleaning propensity, so that there is a need for improvement of the robot cleaner. Another example of a method for controlling a robot cleaner is disclosed in US 2018/360282 A1.

### Disclosure of Invention

### Technical Problem

The present disclosure is to provide a robot cleaner and a method for controlling the same that may perform cleaning in consideration of a cleaning operation of a user without user intervention.

In addition, the present disclosure is to provide a robot cleaner and a method for controlling the same that may perform additional cleaning in a zone cleaned by a user after the user cleans the zone using a manual cleaner.

### Solution to Problem

In order to achieve the above object, the present disclosure provides a robot cleaner and a method for controlling the same in which, after a manual cleaner cleans a region, the robot cleaner is able to clean the corresponding region.

In addition, the present disclosure provides a robot cleaner and a method for controlling the same in which a distance between a manual cleaner and the robot cleaner is able to be maintained to be equal to or greater than a certain distance, so that a user is able to identify that the robot cleaner cleans a region cleaned by the manual cleaner.

In the present disclosure, a scheme of performing cleaning using a manual cleaner by a person is implemented by a robot cleaner, so that the robot cleaner is able to perform cleaning in a scheme similar to the scheme of performing the cleaning by the user. Thus, the user may operate the robot cleaner in a cleaning scheme similar to that of the manual cleaner.

The present disclosure provides a method for controlling a robot cleaner including a first operation of identifying that a manual cleaner and the robot cleaner are turned on, a second operation of identifying, by the robot cleaner, a location of the manual cleaner, a third operation for the robot cleaner to move to a location within a first set distance from the manual cleaner, and a fourth operation in which a movement of the robot cleaner is stopped when the robot cleaner is located at the location within the first set distance from the manual cleaner while the manual cleaner is moving and in which the robot cleaner performs cleaning while moving when the robot cleaner is located at a location within a second set distance from the manual cleaner.

In addition, the present disclosure provides a robot cleaner and a method for controlling the same in which, after a manual cleaner completes cleaning of a region, the robot cleaner cleans the corresponding region.

In the present disclosure, because the manual cleaner does not enter a separate cleaning region being cleaned by the robot cleaner until the robot cleaner completes the cleaning, so that interruption by the robot cleaner may not occur when cleaning with the manual cleaner. In addition, a time at which the manual cleaner cleans a specific region and a time at which the robot cleaner cleans the specific region are different. Thus, the robot cleaner and the manual cleaner are not located in the same region, so that movement lines of the robot cleaner and the manual cleaner do not cross each other.

The robot cleaner is able to start the cleaning for the specific region when sensing information indicating that the manual cleaner has completed the cleaning for the specific region.

The present disclosure provides a method for controlling a robot cleaner including a first operation of identifying that a manual cleaner and the robot cleaner are turned on, a second operation of identifying, by the robot cleaner, a location of the manual cleaner, a third operation of separating cleaning regions for performing cleaning therein from each other, and a fourth operation of starting, by the robot cleaner, cleaning of a corresponding region after the manual cleaner completes cleaning of the corresponding region.

### Advantageous Effects of Invention

According to the present disclosure, because the robot cleaner performs the additional cleaning after the user performs the cleaning using the manual cleaner, the cleaning may be performed more cleanly.

In addition, according to the present disclosure, the robot cleaner may be moved in consideration of a scheme in which the user performs the cleaning using the manual cleaner. Thus, the user may perform the cleaning using the robot cleaner in a pattern similar to the scheme in which the user performs the cleaning using the manual cleaner.

### Brief Description of Drawings

FIG. 1 is a perspective view illustrating a robot cleaner and a charger to which the robot cleaner is docked according to an embodiment of the present disclosure.
FIG. 2 is a view of a robot cleaner in FIG. 1 viewed from above.
FIG. 3 is a view of a robot cleaner in FIG. 1 viewed from the front.
FIG. 4 is a view of a robot cleaner in FIG. 1 viewed from below.
FIG. 5 is a block diagram illustrating a control relationship between main components of a robot cleaner in FIG. 1.
FIG. 6 is a conceptual diagram illustrating a network of a robot cleaner in FIG. 1, a manual cleaner, and a terminal.
FIG. 7 is a conceptual diagram illustrating an example of a network in FIG. 6.
FIG. 8 is a control flowchart according to an embodiment of the present disclosure.
FIG. 9 is a view for illustrating main components in FIG. 8.
FIG. 10 is a schematic view implementing one embodiment.
FIG. 11 is a control flowchart according to another embodiment of the present disclosure.
FIG. 12 is a schematic view implementing another embodiment.

### Mode for the Invention

Hereinafter, a preferred embodiment of the present disclosure that may specifically realize the above objects will be described with reference to the accompanying drawings.

In this process, a size, a shape, or the like of a component shown in the drawings may be exaggerated for clarity and convenience of the description. In addition, terms specifically defined in consideration of a configuration and an operation of the present disclosure may vary depending on a user or an operator's intention or practice. Definitions of such terms should be made based on the contents throughout this specification.

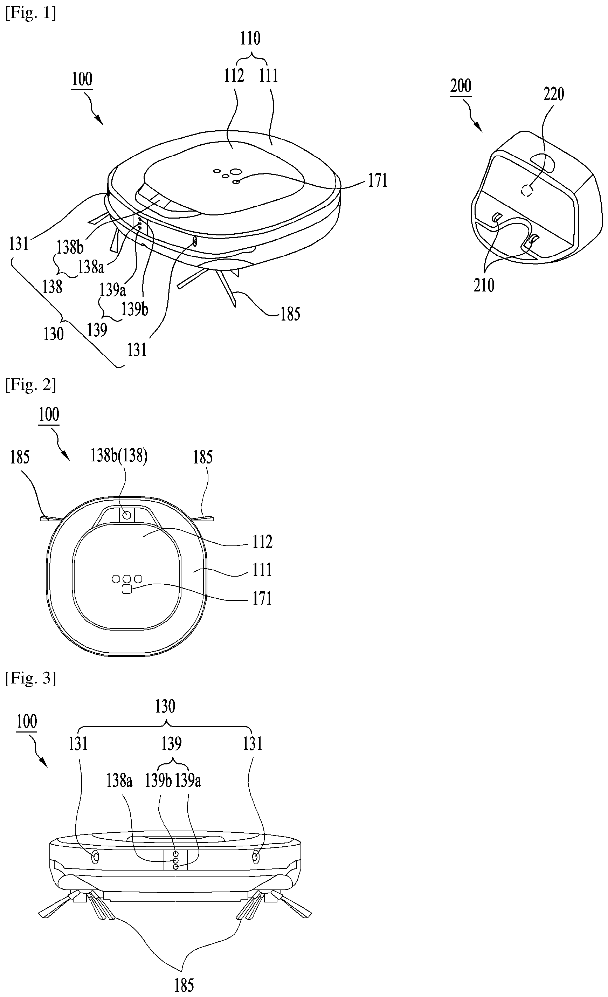

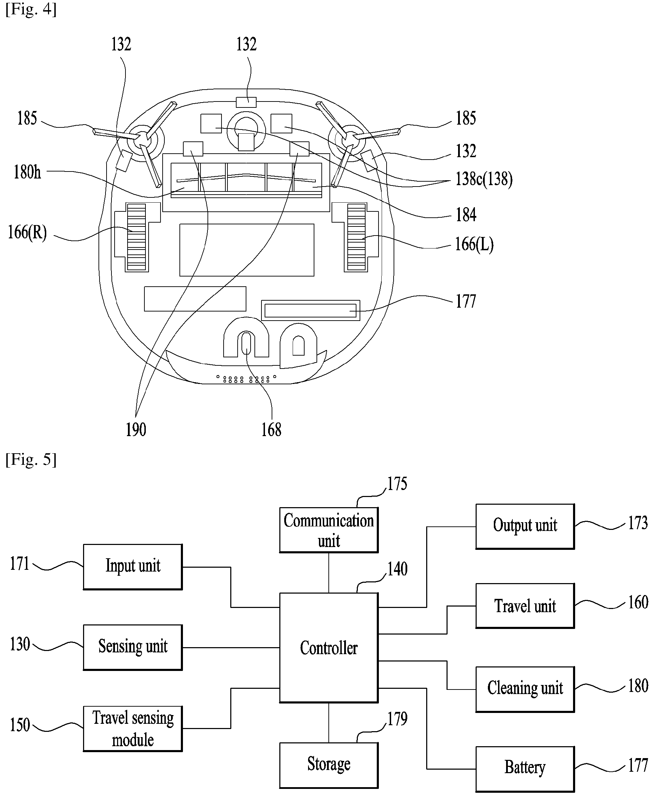

Referring to FIGS. 1 to 5, a robot cleaner 100 includes a main body 110. Hereinafter, in defining each portion of the main body 110, a portion facing a ceiling in a travel zone is defined as a top face (see FIG. 2), a portion facing a floor in the travel zone is defined as a bottom face (see FIG. 4), and a portion directed in a travel direction among portions forming a perimeter of the main body 110 between the top face and the bottom face is defined as a front face (see FIG. 3). In addition, a portion directed in an opposite direction to the front face of the main body 110 may be defined as a rear face. The main body 110 may include a casing 111 for defining therein a space in which various components constituting the robot cleaner 100 are accommodated.

The robot cleaner 100 includes a sensing unit 130 that performs sensing to obtain current state information. The sensing unit 130 may perform the sensing during travel. The sensing unit 130 may sense a situation around the robot cleaner 100. The sensing unit 130 may sense a state of the robot cleaner 100.

The sensing unit 130 may sense information about the travel zone. The sensing unit 130 may sense an obstacle such as a wall, furniture, a cliff, and the like on a travel face. The sensing unit 130 may sense a charger 200. The sensing unit 130 may sense information about the ceiling. Through the information sensed by the sensing unit 130, the robot cleaner 100 may map the travel zone.

The sensing unit 130 may include at least one of a distance sensor 131, a cliff sensor 132, an external signal sensor (not shown), an impact sensor (not shown), an image sensor 138, 3D sensors 138a, 139a, and 139b, and a docking sensor for sensing whether docking is successful.

The sensing unit 130 may include the distance sensor 131 that senses a distance to a surrounding object. The distance sensor 131 may be disposed on the front face or a side face of the main body 110. The distance sensor 131 may sense a surrounding obstacle.

A plurality of distance sensors 131 may be arranged.

For example, the distance sensor 131 may be an infrared sensor equipped with a light emitter and a light receiver, an ultrasonic sensor, an RF sensor, a geomagnetic sensor, and the like. The distance sensor 131 may be implemented using an ultrasonic wave, an infrared ray, or the like. The distance sensor 131 may be implemented using a camera. The distance sensor 131 may be implemented with two or more types of sensors.

The sensing unit 130 may include the cliff sensor 132 that senses an obstacle on the floor in the travel zone. The cliff sensor 132 may sense whether a cliff exists on the floor.

The cliff sensor 132 may be disposed on the bottom face of the robot cleaner 100. A plurality of cliff sensors 132 may be arranged. The cliff sensor 132 disposed on a front portion of the bottom face of the robot cleaner 100 may be disposed. The cliff sensor 132 disposed on a rear portion of the bottom face of the robot cleaner 100 may be disposed.

The cliff sensor 132 may be an infrared ray sensor equipped with a light emitter and a light receiver, an ultrasonic sensor, an RF sensor, a location sensitive detector (PSD) sensor, and the like. For example, the cliff sensor may be the PSD sensor, but may be composed of a plurality of different types of sensors. The PSD sensor includes a light emitter that emits an infrared ray on the obstacle and a light receiver that receives the infrared ray that is reflected back from the obstacle.

The sensing unit 130 may include the impact sensor that senses an impact resulted from contact between the robot cleaner 100 and the external object.

The sensing unit 130 may include the external signal sensor that senses a signal transmitted from outside of the robot cleaner 100. The external signal sensor may include at least one of an infrared ray sensor that senses an infrared signal from the outside, an ultrasonic sensor that senses an ultrasonic signal from the outside, and an RF sensor (radio frequency sensor) that senses an RF signal from the outside.

The sensing unit 130 may include the image sensor 138 that senses an image of an outside of the robot cleaner 100.

The image sensor 138 may include a digital camera. The digital camera may include an image sensor (e.g., a CMOS image sensor) including at least one optical lens and a plurality of photodiodes (e.g., pixels) on which an image is focused by light passed through the optical lens, and a digital signal processor (DSP) that composes an image based on signals output from the photodiodes. The digital signal processor is capable of generating a moving image composed of frames composed of still images as well as a still image.

The image sensor 138 may include a front face image sensor 138a that senses an image in a forward direction of the robot cleaner 100. The front face image sensor 138a may sense an image of the surrounding object such as the obstacle, the charger 200, or the like.

The image sensor 138 may include a top face image sensor 138b that senses an image in an upward direction of the robot cleaner 100. The top face image sensor 138b may sense an image such as the ceiling, a bottom face of furniture disposed above the robot cleaner 100, and the like.

The image sensor 138 may include a bottom face image sensor 138c that senses an image in a downward direction of the robot cleaner 100. The bottom face image sensor 138c may sense an image of the floor.

In addition, the image sensor 138 may include a sensor that senses an image in a lateral or rearward direction.

The sensing unit 130 may include the 3D sensors 138a, 139a, and 139b that sense 3D information of an external environment.

The 3D sensors 138a, 139a, and 139b may include a 3D depth camera 138a that calculates a distance between the robot cleaner 100 and an object to be captured.

In the present embodiment, the 3D sensors 138a, 139a, and 139b include a pattern irradiator 139 for irradiating light of a predetermined pattern in the forward direction of the main body 110, and a front face image sensor 138a that acquires an image of a front of the main body 110. The pattern irradiator 139 may include a first pattern irradiator 139a for irradiating light of a first pattern in a forward and downward direction of the main body 110 and a second pattern irradiator 139b for irradiating light of a second pattern in a forward and upward direction of the main body 110. The front face image sensor 138a may acquire an image of a region into which the light of the first pattern and the light of the second pattern are incident.

The pattern irradiator 139 may be disposed to irradiate an infrared pattern.

In this case, the front face image sensor 138a may measure a distance between the 3D sensor and the object to be captured by capturing a shape of the infrared pattern projected on the object to be captured.

The light of the first pattern and the light of the second pattern may be irradiated in a form of straight lines crossing each other. The light of the first pattern and the light of the second pattern may be irradiated in a form of horizontal straight lines spaced from each other in a vertical direction.

The sensing unit 130 may include the docking sensor (not shown) that senses whether the docking of the robot cleaner 100 to the charger 200 is successful. The docking sensor may be implemented to sense by contact between a corresponding terminal 190 and a charging terminal 210, may be implemented as a sensor disposed separately from the corresponding terminal 190, or may be implemented by sensing a state of a battery 177 during charging. A docking success status and a docking failure status may be sensed by the docking sensor.

The robot cleaner 100 includes the battery 177 for supplying driving power to each component. The battery 177 supplies power for the robot cleaner 100 to perform a behavior based on selected behavior information. The battery 177 is mounted in the main body 110. The battery 177 may be disposed to be detachable from the main body 110.

The battery 177 is disposed to be rechargeable. The robot cleaner 100 is docked to the charger 200, so that the battery 177 may be charged through connection of the charging terminal 210 and the corresponding terminal 190. When a charge amount of the battery 177 becomes equal to or below a predetermined value, the robot cleaner 100 may start a docking mode for the charging. In the docking mode, the robot cleaner 100 travels back to the charger 200.

The robot cleaner 100 includes a travel unit 160 that moves the main body 110 with respect to the floor. The travel unit 160 may include at least one driving wheel 166 that moves the main body 110. The travel unit 160 may include a driving motor. The driving wheel 166 may include a left wheel 166(L) and a right wheel 166(R) arranged on left and right sides of the main body 110, respectively.

The left wheel 166(L) and the right wheel 166(R) may be driven by one driving motor, but a left wheel driving motor for driving the left wheel 166(L) and a right wheel driving motor for driving the right wheel 166(R) may be separately arranged as needed. The travel direction of the main body 110 may be switched in a left or right direction by making a difference in rotation speeds of the left wheel 166(L) and the right wheel 166(R).

The travel unit 160 may include an auxiliary wheel 168 that does not provide a separate driving force, but supports the main body against the floor.

The robot cleaner 100 may include a travel sensing module 150 that senses the behavior of the robot cleaner 100. The travel sensing module 150 may sense the behavior of the robot cleaner 100 by the travel unit 160.

The travel sensing module 150 may include an encoder (not shown) that senses a travel distance of the robot cleaner 100. The travel sensing module 150 may include an acceleration sensor (not shown) that senses acceleration of the robot cleaner 100. The travel sensing module 150 may include a gyro sensor (not shown) that senses turning of the robot cleaner 100.

Through the sensing of the travel sensing module 150, the controller 140 may obtain information about a travel path of the robot cleaner 100. For example, based on the rotation speed of the driving wheel 166 sensed by the encoder, information about a current or past travel speed, the travel distance, and the like of the robot cleaner 100 may be obtained. For example, based on a turning direction of each of the driving wheels 166(L) and 166(R), information about a current or past direction switching process may be obtained.

The robot cleaner 100 includes a cleaning unit 180 for performing a predetermined task. The robot cleaner 100 may clean the floor by the cleaning unit 180 while moving in the travel zone. The cleaning unit 180 may suck the foreign substance. The cleaning unit 180 may perform mopping.

The cleaning unit 180 may include a suction apparatus for sucking the foreign substance, brushes 184 and 185 for performing sweeping, a dust container (not shown) for storing therein the foreign substance collected by the suction apparatus or the brushes, and/or a mop for performing mopping (not shown), and the like.

A suction hole 180h into which air is sucked may be defined in the bottom face of the main body 110. The suction apparatus (not shown) for providing a suction force to suck the air through the suction hole 180h and the dust container (not shown) for collecting dust sucked together with the air through the suction hole 180h may be arranged in the main body 110.

An opening for insertion and removal of the dust container may be defined in the casing 111, and a dust container cover 112 for opening and closing the opening may be pivotably disposed with respect to the casing 111.

The task unit 180 may include a roll-type main brush 184 exposed through the suction hole 180h and an auxiliary brush 185 located at a front portion of the bottom face of the main body 110 and including multiple wings extending radially. Rotation of such brushes 184 and 185 removes the dust from the floor in the travel zone, and the dust thus separated from the floor is sucked through the suction hole 180h and collected in the dust container.

The robot cleaner 100 includes the corresponding terminal 190 for charging the battery 177 when being docked to the charger 200. The corresponding terminal 190 is disposed at a location accessible to the charging terminal 210 of the charger 200 in the docking success state of the robot cleaner 100. In the present embodiment, a pair of corresponding terminals 190 are arranged on the bottom face of the main body 110.

The robot cleaner 100 may include an input unit 171 for inputting information. The input unit 171 may receive on/off or various commands. The input unit 171 may include a button, a key, a touch-type display, or the like. The input unit 171 may include a microphone for speech recognition.

The robot cleaner 100 may include an output unit 173 for outputting information. The output unit 173 may inform the user of various information. The output unit 173 may include a speaker and/or a display.

The robot cleaner 100 may include a communication unit 175 that transmits and receives information to and from other external devices. The communication unit 175 may be connected to a terminal device and/or another device located in a specific region in one of wired, wireless, and satellite communication schemes to transmit and receive data.

The communication unit 175 may communicate with a terminal 300, a wireless router 400, and/or a server 500. The communication unit 175 may communicate with other devices such as the terminal 300, another robot cleaner, and the like located in the specific region. The communication unit 175 may receive various command signals from the external device such as the terminal 300 and the like. The communication unit 175 may transmit information to be output to the external device such as the terminal 300 and the like. The terminal 300 may output the information received from the communication unit 175.

The robot cleaner 100 includes storage 179 that stores various information. The storage 179 may include a volatile or a non-volatile recording medium.

A map for the travel zone may be stored in the storage 179. The map may be input by a terminal and the like that may exchange information with the robot cleaner 100 through the communication unit 175 or may be generated by the robot cleaner 100 as the robot cleaner 100 learns by itself. In the former case, the terminal may be exemplified as a remote control, a PDA, a laptop, a smart phone, a tablet, and the like equipped with an application for setting the map.

The robot cleaner 100 includes the controller 140 that processes and determines various information such as mapping and/or recognizing a current location. The controller 140 may control overall operations of the robot cleaner 100 through control of various components of the robot cleaner 100. The controller 140 may map the travel zone through the image and recognize the current location on the map. That is, the controller 140 may perform a simultaneous localization and mapping (SLAM) function.

The controller 140 may receive the information from the input unit 171 and process the received information. The controller 140 may receive the information from the communication unit 175 and process the received information. The controller 140 may receive the information from the sensing unit 130 and process the received information.

The controller 140 may control the communication unit 175 to transmit the information.

The controller 140 may control the output of the output unit 173. The controller 140 may control the driving of the travel unit 160. The controller 140 may control the operation of the cleaning unit 180.

In one example, the charger 200 includes the charging terminal 210 disposed to be connected to the corresponding terminal 190 in the docking success state of the robot cleaner 100. The charger 200 may include a signal transmitter (not shown) for transmitting a guide signal. The charger 200 may be disposed to be placed on the floor.

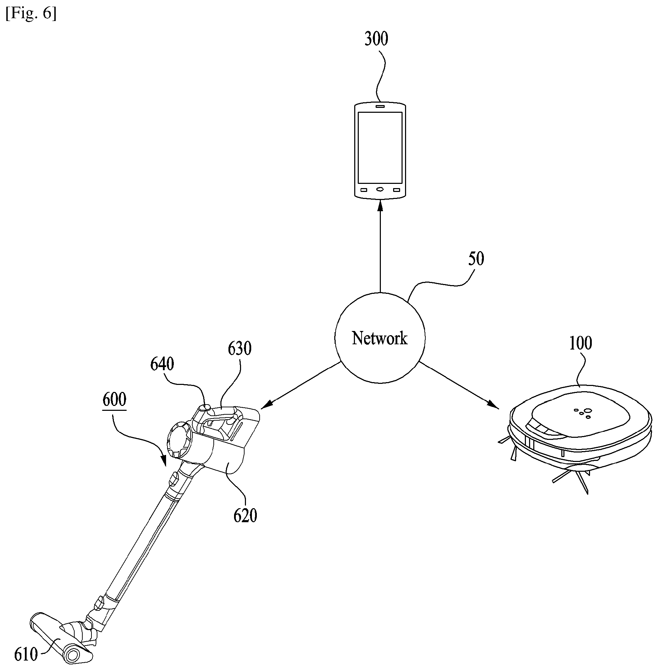

As shown in FIG. 6, the manual cleaner 600 used by a person to perform cleaning may be in communication with the terminal 300 and the robot cleaner 100 through a network 50.

The manual cleaner 600 may include a suction nozzle 610 for sucking the foreign substance, a dust container 620 for storing the sucked foreign substance therein, a handle 630, and a manipulator 640.

Through the manipulator 640, the user may adjust a suction force of the suction nozzle 610. That is, the suction force may be increased in a region with a large amount of dust and decreased in a region with a small amount of dust. In addition, another user may adjust the suction force to be strong in the same manner regardless of the amount of dust. Because the manual cleaner 600 performs the cleaning while the user moves the cleaner, cleaning information that reflects a cleaning propensity, a scheme, and the like of the user may be obtained.

The manipulator 640 may include a communication unit capable of communicating with the robot cleaner 100 or the terminal 300 through the network 50. Specifically, an ultra wide band (UWB) module is installed in the manipulator 640, so that information about the movement of the manual cleaner 600 may be recognized. The UWB module capable of sensing a signal transmitted from the manual cleaner 600 may be installed in the charger 200 of the robot cleaner or a separate charger in which the manual cleaner 600 is charged. The robot cleaner 100 shown in FIG. 6 is a concept including the charger 200, and the manual cleaner 600 is a concept including the charger for charging the manual cleaner. In this case, the network 50 may refer to a network through which the signal is transmitted and received by the UWB module.

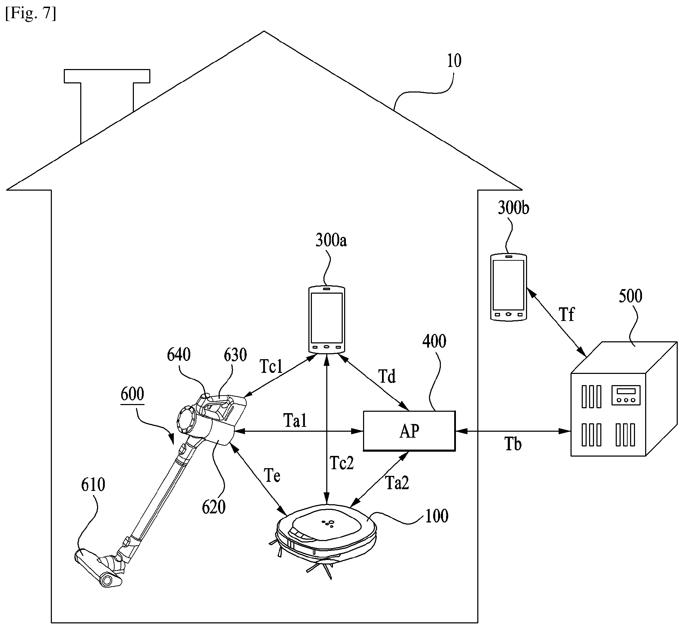

FIG. 7 is a conceptual diagram illustrating an example of the predetermined network. The robot cleaner 100, the manual cleaner 600, the wireless router 400, the server 500, and mobile terminals 300a and 300b are connected to each other by the network to transmit and receive information with each other.

Referring to Ta1 and Ta2 in FIG. 7, the communication unit 175 of the robot cleaner and the communication unit of the manual cleaner may wirelessly communicate with the wireless router 400. Referring to Tc1 and Tc2 in FIG. 7, the communication unit 175 of the robot cleaner and the communication unit of the manual cleaner may wirelessly communicate with the mobile terminal 300a. Although not illustrated, the communication unit 175 of the robot cleaner and the communication unit of the manual cleaner may wirelessly communicate directly with the server 500. For example, the communication unit 175 may be implemented to wirelessly communicate using wireless communication technologies such as IEEE 802.11 WLAN, IEEE 802.15 WPAN, UWB, Wi-Fi, Zigbee, Z-wave, Blue-Tooth, and the like. The communication unit 175 may vary based on a communication scheme of another device or the server to communicate with.

Through the communication unit 175, status information obtained through the sensing of the sensing unit 130 may be transmitted over the network. The information may be received by the robot cleaner 100 on the network through the communication unit 175, and the robot cleaner 100 may be controlled based on such received information.

The robot cleaner 100, the manual cleaner 600, the wireless router 400, the mobile terminal 300a, and the like may be arranged in a building 10 such as a house. The server 500 may be implemented in the building 10 but may be implemented outside the building 10 as a more extensive network.

The wireless router 400 and the server 500 may include a communication module that may be connected to the network based on a determined communication protocol.

The robot cleaner 100 and the manual cleaner 600 may exchange data with the server 500 through the network. The robot cleaner 100 and the manual cleaner 600 may exchange the data wiredly and wirelessly with the wireless router 400, and consequently exchange the data with the server 500.

In addition, the robot cleaner 100 and the manual cleaner 600 may exchange the data with the terminals 300a and 300b through the network. The robot cleaner 100 and the manual cleaner 600 may exchange the data wiredly and wirelessly with the wireless router 400, resulting in the data exchange with the terminals 300a and 300b. Further, the robot cleaner 100 and the manual cleaner 600 may exchange the data with the terminals 300a and 300b using the Bluetooth and the like without going through the wireless router 400.

In one example, the wireless router 400 may allocate a wireless channel based on a predetermined communication scheme to electronic devices in a predetermined region and perform wireless data communication through the corresponding channel. In this connection, the predetermined communication scheme may be a WiFi communication scheme.

The wireless router 400 may communicate with the robot cleaner 100 and the manual cleaner 600 located within a predetermined region range. The wireless router 400 may communicate with the mobile terminal 300a located within the predetermined region range. The wireless router 400 may communicate with the server 500.

The server 500 may be accessible through Internet. The various terminals 300b connected to the Internet may communicate with the server 500. The terminal 300b may be, for example, a mobile terminal such as a personal computer (PC), a smart phone, and the like.

The server 500 includes a processor capable of processing a program. A function of the server 500 may be performed by a central computer (cloud), but may also be performed by a user's computer or mobile terminal. For example, the server 500 may perform machine learning and/or data mining. The server 500 may perform learning using the collected information.

Referring to Td, Ta1, and Ta2 in FIG. 7, the mobile terminal 300a may be wirelessly connected to the wireless router 400 through the wi-fi and the like. In this case, the mobile terminals 300a and 300b may transmit and receive information to and from a plurality of robot cleaners 100a and 100b via the wireless router 400.

Referring to Tc1 and Tc2 in FIG. 7, the mobile terminal 300a may be wirelessly connected directly to the robot cleaner 100 through the Bluetooth or the like. In this case, the mobile terminal 300a may transmit and receive the information directly with the plurality of robot cleaners 100a and 100b.

Referring to Te in FIG. 7, the plurality of robot cleaners 100a and 100b may be directly and wirelessly connected to each other using the Bluetooth and the like. In this case, the plurality of robot cleaners 100a and 100b may directly transmit and receive information with each other.

Referring to Ta1 and Ta2 in FIG. 7, the plurality of robot cleaners 100a and 100b may indirectly transmit and receive the information with each other via the wireless router 400.

In one example, the network may further include a gateway (not shown). The gateway may mediate the communication between the robot cleaner 100 and the wireless router 400. The gateway may communicate with the robot cleaner 100 wirelessly. The gateway may communicate with the wireless router 400. For example, communication between the gateway and the wireless router 400 may be based on Ethernet or the Wi-Fi.

In embodiments to be described below, the controller 140 of the robot cleaner 140 may obtain information related to the manual cleaner 600 through communication between the UWB module disposed in the manipulator 640 included in the manual cleaner 600 and an UWB module disposed in the communication unit 175 of the robot cleaner.

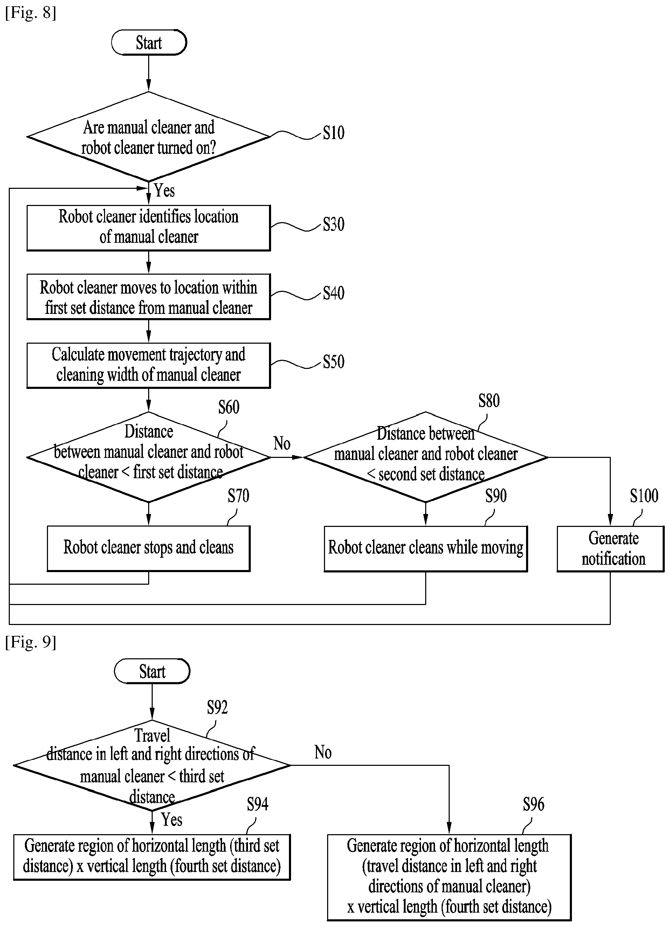

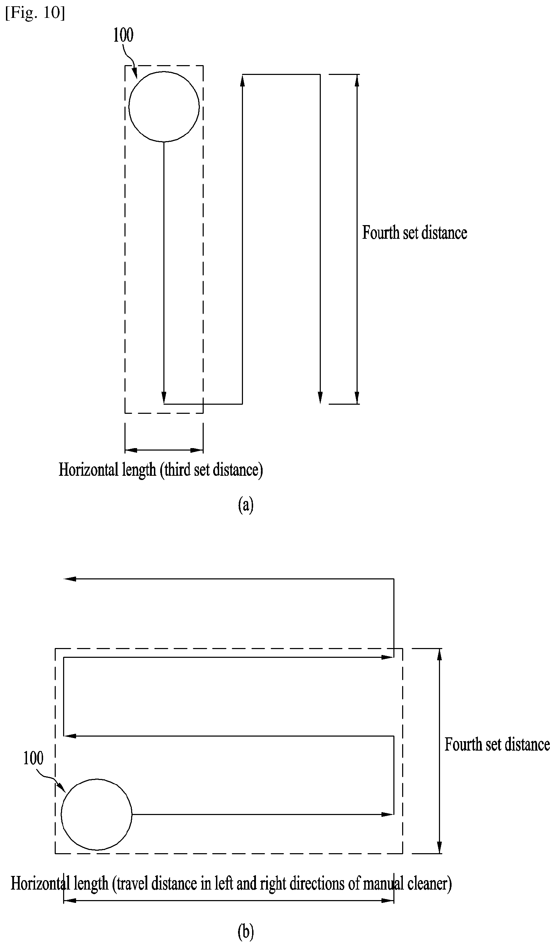

FIG. 8 is a control flowchart according to an embodiment of the present disclosure. Further, FIG. 9 is a view for illustrating main components in FIG. 8. Further, FIG. 10 is a schematic view implementing one embodiment.

Referring to FIGS. 8 to 10, an embodiment includes a first operation of identifying that the manual cleaner 600 and the robot cleaner 100 are turned on, a second operation of identifying, by the robot cleaner 100, a location of the manual cleaner 600, a third operation in which the robot cleaner 100 moves to a location within a first set distance from the manual cleaner 600, and a fourth operation in which the movement of the robot cleaner 100 is stopped when the robot cleaner 100 is located at the location within the first set distance from the manual cleaner 600 while the manual cleaner 600 is moving, and in which the robot cleaner 100 performs the cleaning while moving when the robot cleaner 100 is located at a location within a second set distance from the manual cleaner 600.

First, the user may perform the cleaning while moving the manual cleaner 600 through the manipulator 640 of the manual cleaner 600. In addition, the user may turn on the robot cleaner 100 by applying power to the robot cleaner 100 through the input unit 171 of the robot cleaner 100. Because the robot cleaner 100 and the manual cleaner 600 may communicate with each other through the UWB module, the robot cleaner 100 may identify that the manual cleaner 600 is turned on and operated by a signal received through the communication unit 175 of the robot cleaner 100.

That is, the controller 140 may identify that the manual cleaner and the robot cleaner are turned on (S10).

Because the manual cleaner and the robot cleaner are in communication with each other, the robot cleaner 100 may identify the location of the manual cleaner 600 (S30). The user performs the cleaning while moving the manual cleaner 600. As the manual cleaner 600 moves, a signal related to a location is transmitted from the manual cleaner 600 to the robot cleaner 100.

In order for the robot cleaner 100 to identify the location of the manual cleaner 600, the robot cleaner 100 moves to the location within the first set distance from the manual cleaner (S40). The controller 140 of the robot cleaner drives the travel unit to move the robot cleaner 100 to a location corresponding to the first set distance from the manual cleaner 600. In this connection, the robot cleaner 100 may move in a linear direction toward the location of the manual cleaner 600, so that the robot cleaner 100 may move by the shortest distance.

In one example, the first set distance may be approximately 1.5 m. The first set distance may be a distance corresponding to approximately 3 times the width of the casing of the robot cleaner 100. When the robot cleaner is separated from the manual cleaner by the first set distance, and when the user performs the cleaning while moving the manual cleaner, the user is not disturbed by the robot cleaner when moving the manual cleaner. In one example, when the distance between the robot cleaner 100 and the manual cleaner 600 corresponds to approximately the first set distance, the user may easily identify that the robot cleaner is moved together as the manual cleaner is moved, thereby identifying that the cleaning is performed by the robot cleaner and the manual cleaner.

A movement trajectory and a cleaning width of the manual cleaner 600 are calculated by the controller 140 (S50). Because the communication unit 175 of the robot cleaner continuously receives a signal from the manual cleaner 600, a location change of the manual cleaner may be sensed as a location of the generated signal changes. The movement trajectory and the cleaning width of the manual cleaner may be calculated based on the location change.

In one example, the movement trajectory of the manual cleaner 600 may mean a path along which the manual cleaner is moved while the manual cleaner is turned on and the cleaning is being performed. For example, the movement trajectory of the manual cleaner 600 may mean a travel path of cleaning a region inside a room while the manual cleaner 600 moves in the room when the user cleans the room using the manual cleaner 600. Some users start the cleaning by moving the manual cleaner 600 to a center of the room, while some users may start the cleaning by moving the manual cleaner 600 to a corner of the room.

In addition, the cleaning width of the manual cleaner 600 may mean a travel distance in the left and right directions of the manual cleaner while the manual cleaner is turned on and the cleaning is performed. In this connection, the cleaning width may mean a width when the manual cleaner repeatedly moves in the left and right directions. Depending on the user, the cleaning may be performed without the cleaning width, that is, without repeatedly moving the manual cleaner 600 in the left and right directions. In this case, the controller 140 is not able to calculate the cleaning width of the manual cleaner 600.

The travel trajectory, which has a greater travel range than the cleaning width, includes a movement in forward and rearward directions. Usually, the user may clean a corresponding region while moving the manual cleaner in the left and right directions by a range corresponding to the cleaning width. In this connection, the user performs a region to be cleaned while moving the location of the manual cleaner after repeatedly moving the manual cleaner in the left and right directions.

Although the robot cleaner 100 moves toward the manual cleaner 600, the user performs the cleaning while moving the manual cleaner 600, so that the distance between the manual cleaner 600 and the robot cleaner 100 constantly changes.

It is determined whether the distance between the manual cleaner and the robot cleaner is equal to or less than the first preset distance (S60).

When the distance between the manual cleaner and the robot cleaner is equal to or less than the first preset distance, it is determined that the robot cleaner is disposed too close to the manual cleaner. Thus, the movement of the robot cleaner 100 may be stopped. In addition, the cleaning may be performed while the robot cleaner 100 is stopped at a corresponding location (S70). When the robot cleaner is located at the location within the first set distance from the manual cleaner, the robot cleaner may hit the user or interfere with a path along which the user is intended to move when the user moves the manual cleaner 600 to perform the cleaning. Thus, when the user performs the cleaning, various inconveniences may be caused. Thus, when the robot cleaner 100 is located close to the manual cleaner 600, the robot cleaner is stopped.

Whether the distance between the robot cleaner and the manual cleaner is equal to or less than the second set distance is determined (S80) while the distance between the robot cleaner and the manual cleaner is equal to or greater than the first set distance in S60.

When the distance between the robot cleaner and the manual cleaner is equal to or less than the second preset distance, it is determined that the distance between the robot cleaner and the manual cleaner is properly maintained, and the robot cleaner 100 performs the cleaning while moving (S90).

In this connection, the second set distance may be approximately 3 m. The second set distance may be a distance corresponding to approximately 10 times the casing of the robot cleaner 100. When the robot cleaner and the manual cleaner are located approximately within the second set distance, the user does not have to worry about hitting the robot cleaner when cleaning while moving the manual cleaner. In addition, because the user is at a distance that is sufficient to visually identify the movement of the robot cleaner, the user may identify that the manual cleaner by the user and the robot cleaner by autonomous travel perform the cleaning together.

When the robot cleaner 100 is located at the location within the second preset distance from the manual cleaner 600, the robot cleaner may perform the cleaning while traveling in a set rectangular region. The rectangular region may be defined by information about the cleaning width of the manual cleaner 600.

The controller 140 determines whether the travel distance in the left and right directions of the manual cleaner is less than a third set distance (S92).

In this connection, the third set distance may be the same as the width of the casing of the robot cleaner. The third preset distance may be approximately 0.5 m. The travel distance in the left and right directions of the manual cleaner 600 greater than the third set distance may mean a situation in which the robot cleaner needs to move in the left and right directions along a cleaning path of the manual cleaner 600. On the other hand, the travel distance in the left and right directions of the manual cleaner 600 less than the third set distance may mean a situation in which the robot cleaner does not need to move in the left and right directions along the cleaning path of the manual cleaner 600.

When the travel distance in the left and right directions of the manual cleaner is less than the third set distance in S92, a horizontal length of the set rectangular region may be defined as the third preset distance and a vertical length of the region may be defined as a fourth preset distance (S94).

In this connection, the robot cleaner 100 performs the cleaning based on a scheme corresponding to (a) in FIG. 10. The fourth preset distance may be the same as the first preset distance. One rectangular region is represented by a dotted line. After completing cleaning of a rectangular region located on a left side, the robot cleaner 100 cleans a next region adjacent in a horizontal direction. Based on (a) in FIG. 10, the robot cleaner 100 performs the cleaning while widening each rectangular region while gradually moving from left to right. One rectangular region may mean each region defined by horizontal and vertical lengths.

When the travel distance in the left and right directions of the manual cleaner is greater than the third preset distance in S92, a horizontal length of a set rectangular region may be defined as the travel distance in the left and right directions of the manual cleaner and a vertical length of the region may be defined as the fourth preset distance (S96).

In this connection, the robot cleaner 100 performs the cleaning in a scheme corresponding to (b) in FIG. 10. The fourth preset distance may be the same as the first preset distance. One rectangular region is represented by a dotted line. After completing cleaning of a rectangular region located below, the robot cleaner 100 cleans a next region adjacent in a vertical direction. Based on (b) in FIG. 10, the robot cleaner 100 performs the cleaning while widening each rectangular region while gradually moving upward.
(a) in FIG. 10 discloses a scheme in which the robot cleaner performs the cleaning in a form similar to an overall movement trajectory of the manual cleaner in a situation in which the user does not clean while moving the manual cleaner in the left and right directions or the cleaning width is less than the width of the robot cleaner.
(b) in FIG. 10 discloses a scheme in which the robot cleaner performs the cleaning while including a path along which the robot cleaner moves in the left and right directions by reflecting the travel path and the cleaning width of the manual cleaner because the user performs the cleaning while moving the manual cleaner in the left and right directions.

That is, the present embodiment discloses a technology for changing the scheme in which the robot cleaner performs the cleaning as the user's cleaning scheme changes or the user using the manual cleaner changes. Thus, the user may recognize that the movement of the robot cleaner reflects the cleaning scheme of the manual cleaner, so that the user may identify that the robot cleaner efficiently performs the cleaning.

When the distance between the manual cleaner and the robot cleaner is greater than the second preset distance in S80, a notification may be generated for the user to notify the user of related information (S100).

When the distance between the robot cleaner and the manual cleaner is greater than the second preset distance, it may be difficult for the robot cleaner to receive the signal generated from the manual cleaner. Thus, a situation in which it is difficult for the robot cleaner to determine the location of the manual cleaner may occur and the robot cleaner may not obtain the information of the manual cleaner. Thus, in this case, the notification may be generated for the user to guide the user to solve such problem.

The notification may be generated in the manipulator 640 of the manual cleaner 600. The manipulator 640 may generate a simple sound or may have a simple window to inform the user of the information. Because the user is performing the cleaning using the manual cleaner, the user may recognize the information generated by the manipulator 640.

In one example, the notification may be generated in the output unit 173 of the robot cleaner 100. As a sound is generated in the output unit 173, the user may recognize that the robot cleaner 100 is far away from the manual cleaner.

After recognizing the notification, the user may move the manual cleaner to a location close to the robot cleaner.

In one example, after the notification is generated in S100, the robot cleaner may identify the location of the manual cleaner as in S30. In addition, as in S40, the robot cleaner 100 may be moved toward the manual cleaner 600. In this connection, the robot cleaner 100 may be moved to a location close to the manual cleaner in a path like a straight line to the location of the manual cleaner 600.

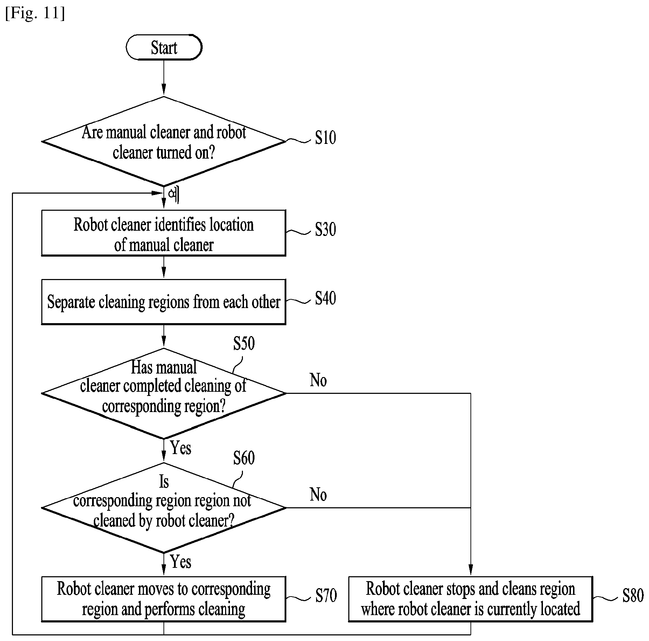

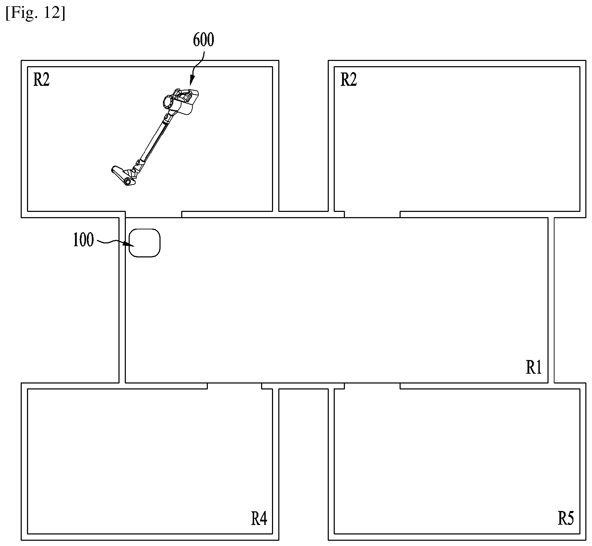

FIG. 11 is a control flowchart according to another embodiment of the present disclosure. Further, FIG. 12 is a schematic view implementing another embodiment.

Referring to FIGS. 11 and 12, another embodiment includes a first operation of identifying that the manual cleaner 600 and the robot cleaner 100 are turned on, a second operation of identifying, by the robot cleaner 100, the location of the manual cleaner 600, a third operation of separating cleaning regions in which the cleaning is performed from each other, and a fourth operation in which the robot cleaner 100 starts to clean the corresponding region when the manual cleaner completes the cleaning of the corresponding region.

In another embodiment, unlike an embodiment, when the manual cleaner 600 completes cleaning of one region, the robot cleaner 100 cleans the corresponding region. That is, until the person completes cleaning of one room using the manual cleaner, the robot cleaner does not start the cleaning of the room. The robot cleaner waits for the manual cleaner to complete the cleaning of the corresponding region, and then cleans the corresponding region when the manual cleaner completes the cleaning.

First, it is identified that the power is applied to the manual cleaner 600 and the robot cleaner 100 (S10).

Then, the robot cleaner 100 identifies the location of the manual cleaner 600 (S30). In this connection, as in an embodiment, the manual cleaner 600 and the robot cleaner 100 may transmit and receive the signal using the UWB module. Using the transmitted and received signal, the robot cleaner 100 may obtain various information such as the location, the travel path, and the like of the manual cleaner 600.

The controller 140 of the robot cleaner 100 separates cleaning regions of a space where the manual cleaner 600 performs the cleaning from each other (S40). In this connection, the separation of the cleaning regions may be achieved using previously stored map information.

The controller 140 may divide a space of the house into a plurality of various regions as shown in FIG. 12. One whole space may be variously divided into R1 to R5. Divided regions may be separated from each other by a component for dividing the space such as a door and may be arbitrarily separated from each other in units of an area. Each divided region may also be divided using a conventional scheme of dividing the space into a room, a kitchen, a living room, and the like. When the various regions are already divided from each other in one map, the controller 140 may not divide the space into the regions again and may use information about the previously divided regions.

In one example, the controller 140 may determine a region where the manual cleaner 600 is located. The controller 140 may receive a signal transmitted from the UWB module of the manual cleaner 600 and read which divided region a location at which the received signal is transmitted is included. In FIG. 12, it may be seen that the user performs the cleaning using the manual cleaner 600 and the manual cleaner is disposed in a region R2. When the user performs the cleaning using the manual cleaner 600, the manual cleaner is moved while the manual cleaner is turned on. When the power is supplied to the manual cleaner, the power is also supplied to the UWB module to continuously transmit the signal.

Whether the manual cleaner 600 has completed the cleaning of the corresponding region is determined (S50). The controller 140 may determine whether the manual cleaner 600 has completed the cleaning.

When the manual cleaner 600 is turned off, the controller 140 may determine that the manual cleaner has completed the cleaning of the corresponding region. Usually, when completing the cleaning, the user may turn off the manual cleaner. When the manual cleaner 600 is turned off, the signal generation is stopped in the manual cleaner 600 and the robot cleaner 100 is not able to receive the signal. Thus, the communication between the manual cleaner and the robot cleaner is not achieved. Thus, the controller 140 may determine that the manual cleaner 600 is turned off.

When the manual cleaner 600 is out of the corresponding region while the manual cleaner 600 is turned on, the controller 140 may determine that the manual cleaner has completed the cleaning of the corresponding region. When the manual cleaner 600 is turned on, the communication may be continuously performed between the manual cleaner 600 and the robot cleaner 100. Thus, the robot cleaner 100 may sense the change in the location of the manual cleaner 600 and determine that, after being present in a specific region, the manual cleaner leaves the corresponding region. In this case, when the manual cleaner generates the signal in another region, and the corresponding signal is received by the robot cleaner 100, it may be sensed that the manual cleaner 600 is out of the corresponding region.

When the signal input by the user through the manual cleaner 600 is transmitted to the robot cleaner 100, it may be determined that the manual cleaner has completed the cleaning of the corresponding region. The user may manipulate the manual cleaner 600 through the manipulator 640 of the manual cleaner 600. Thus, the user may input information indicating that the manual cleaner 600 has completed the cleaning of the region where the manual cleaner 600 is located. For example, the information input by the user may include a direct content indicating that the cleaning is completed, but may include inputs of various forms for maintaining a state in which the manual cleaner 600 is turned on for a short time even when the cleaning of the corresponding region has completed. When the user directly or indirectly inputs the information on the completion of the cleaning in the manual cleaner 600, a relevant signal is transmitted to the robot cleaner 100, so that the controller 140 may determine that the manual cleaner 600 has completed the cleaning of the corresponding region.

When it is determined in S50 that the cleaning of the corresponding region has completed by the manual cleaner, whether the corresponding region is a region not cleaned by the robot cleaner is determined (S60).

When the corresponding region is the region not cleaned by the robot cleaner, the robot cleaner 100 moves to the corresponding region and performs the cleaning (S70). In this connection, the robot cleaner 100 waits in a different region from the manual cleaner 600 as shown in FIG. 12, and then moves to R2 and cleans R2 when it is determined that the manual cleaner 600 has completed cleaning of R2.

On the other hand, when the manual cleaner is performing the cleaning for the corresponding region in S60 or when the corresponding region is a region already cleaned by the robot cleaner in S60, the robot cleaner may stop moving. In addition, the robot cleaner may clean a region where the robot cleaner is currently located (S80).

While the manual cleaner is cleaning the region R2, the robot cleaner waits in a region other than R2. In FIG. 12, it may be seen that the robot cleaner is in a region R1. In this connection, the robot cleaner may stop moving in the region R1 and wait without cleaning. Otherwise, the robot cleaner 100 may perform the cleaning for the current location, that is, the region R1.

Because the robot cleaner is located in the different region from the manual cleaner, the user does not collide with the robot cleaner and the travel path of the manual cleaner is not limited by the robot cleaner while the user performs the cleaning using the manual cleaner.

In one example, when the robot cleaner has already completed the cleaning for the region R2, the robot cleaner does not move again to R2 to clean R2 even when the manual cleaner has completed the cleaning for R2. That is, the robot cleaner may wait at the current location R1 or clean R1.

In one example, the robot cleaner may wait to start cleaning R1 and R3 to R5, not R2, and then, after the manual cleaner completes cleaning for each region, may perform cleaning for the corresponding region.

As described above, because the robot cleaner and the manual cleaner are maintained in different cleaning regions, the user may not be disturbed by the robot cleaner during the cleaning using the manual cleaner.

The present disclosure is not limited to the above-described embodiments. As may be seen from the appended claims, the present disclosure is able to be modified by those of ordinary skill in the field to which the present disclosure belongs, and such modifications are within the scope of the present disclosure.

## Claims

1. A method for controlling a robot cleaner, the method comprising:
a first operation (S10) of identifying that a manual cleaner (600) and the robot cleaner (100) are turned on;
a second operation (S30) of identifying, by the robot cleaner (100), a location of the manual cleaner (600);
a third operation (S40) of moving, by the robot cleaner (100), to a location within a first set distance from the manual cleaner (600); and
a fourth operation of stopping (S70) the movement of the robot cleaner (100) when the robot cleaner (100) is located at the location within the first set distance from the manual cleaner (600) while the manual cleaner (600) is moving, and performing (S90), by the robot cleaner (100), cleaning while moving when the robot cleaner (100) is located at a location within a second set distance from the manual cleaner (600).

2. The method of claim 1, wherein the third operation includes:
calculating (S50) a movement trajectory and a cleaning width of the manual cleaner (600).

3. The method of claim 2, wherein the movement trajectory of the manual cleaner (600) is a travel path of the manual cleaner (600) while the manual cleaner (600) is turned on and performs cleaning.

4. The method of claim 3, wherein the cleaning width of the manual cleaner (600) is a travel distance in left and right directions of the manual cleaner (600) while the manual cleaner (600) is turned on and performs the cleaning.

5. The method of claim 4, wherein the fourth operation includes:
performing, by the robot cleaner (100), the cleaning while traveling in a set rectangular region when the robot cleaner (100) is located at the location within the second set distance from the manual cleaner (600).

6. The method of claim 5, wherein, when the cleaning width of the manual cleaner (600) is less than a third set distance, a horizontal length of the region is defined as the third set distance and a vertical length of the region is defined as a fourth set distance (S94).

7. The method of claim 6, wherein, when the cleaning width of the manual cleaner (600) is less than the third set distance, after cleaning one region, the robot cleaner (100) cleans a next region adjacent in a horizontal direction.

8. The method of claim 5, wherein a third set distance is the same width as a width in the left and right directions of the robot cleaner (100).

9. The method of claim 5, wherein a fourth set distance is the same as the first set distance.

10. The method of claim 5, wherein, when the cleaning width of the manual cleaner (600) is greater than a third set distance, a horizontal length of the region is defined as the travel distance in the left and right directions of the manual cleaner (600) and a vertical length of the region is defined as a fourth set distance (S96).

11. The method of claim 10, wherein, when the cleaning width of the manual cleaner (600) is greater than the third set distance, after cleaning one region, the robot cleaner (100) cleans a next region adjacent in a vertical direction.

12. The method of claim 1, wherein, when a distance between the robot cleaner (100) and the manual cleaner (600) is greater than the second set distance, a notification is generated for a user (S100).

13. The method of claim 12, wherein the notification is generated in the manual cleaner (600).

14. The method of claim 12, wherein the notification is generated in the robot cleaner (100).

15. The method of claim 12, wherein, when the distance between the robot cleaner (100) and the manual cleaner (600) is greater than the second set distance, the robot cleaner (100) moves toward the manual cleaner (600).

## Patentansprüche

1. Verfahren zum Steuern eines Reinigungsroboters, wobei das Verfahren umfasst:
einen ersten Vorgang (S10) des Erkennens, dass eine manuelle Reinigungsvorrichtung (600) und der Reinigungsroboter (100) eingeschaltet sind;
einen zweiten Vorgang (S30) des Erkennens, durch den Reinigungsroboter (100), eines Orts der manuellen Reinigungsvorrichtung (600);
einen dritten Vorgang (S40) des sich Bewegens, durch den Reinigungsroboter (100), an einen Ort innerhalb einer ersten vorgegebenen Distanz von der manuellen Reinigungsvorrichtung (600); und
einen vierten Vorgang des Anhaltens (S70) der Bewegung des Reinigungsroboters (100), wenn sich der Reinigungsroboter (100) an dem Ort innerhalb der ersten vorgegebenen Distanz von der manuellen Reinigungsvorrichtung (600) befindet, während sich die manuelle Reinigungsvorrichtung (600) bewegt, und Ausführen (S90), durch den Reinigungsroboter (100), von Reinigung, während er sich bewegt, wenn sich der Reinigungsroboter (100) an einem Ort innerhalb einer zweiten vorgegebenen Distanz von der manuellen Reinigungsvorrichtung (600) befindet.

2. Verfahren nach Anspruch 1, wobei der dritte Vorgang beinhaltet:
Berechnen (S50) einer Bewegungsbahn und einer Reinigungsbreite der manuellen Reinigungsvorrichtung (600).

3. Verfahren nach Anspruch 2, wobei die Bewegungsbahn der manuellen Reinigungsvorrichtung (600) ein Laufweg der manuellen Reinigungsvorrichtung (600) ist, während die manuelle Reinigungsvorrichtung (600) eingeschaltet ist und Reinigung ausführt.

4. Verfahren nach Anspruch 3, wobei die Reinigungsbreite der manuellen Reinigungsvorrichtung (600) eine Laufdistanz in der Links- und der Rechtsrichtung der manuellen Reinigungsvorrichtung (600) ist, während die manuelle Reinigungsvorrichtung (600) eingeschaltet ist und die Reinigung ausführt.

5. Verfahren nach Anspruch 4, wobei der vierte Vorgang beinhaltet:
Ausführen, durch den Reinigungsroboter (100), der Reinigung, während er in einem vorgegebenen rechteckigen Gebiet läuft, wenn sich der Reinigungsroboter (100) an dem Ort innerhalb der zweiten vorgegebenen Distanz von der manuellen Reinigungsvorrichtung (600) befindet.

6. Verfahren nach Anspruch 5, wobei, wenn die Reinigungsbreite der manuellen Reinigungsvorrichtung (600) geringer als eine dritte vorgegebene Distanz ist, eine horizontale Länge des Gebiets als die dritte vorgegebene Distanz definiert wird und eine vertikale Länge des Gebiets als eine vierte vorgegebene Distanz definiert wird (S94).

7. Verfahren nach Anspruch 6, wobei, wenn die Reinigungsbreite der manuellen Reinigungsvorrichtung (600) geringer als die dritte vorgegebene Distanz ist, der Reinigungsroboter (100) nach dem Reinigen eines Gebiets ein in einer horizontalen Richtung benachbartes nächstes Gebiet reinigt.

8. Verfahren nach Anspruch 5, wobei eine dritte vorgegebene Distanz die gleiche Breite wie eine Breite in der Links- und der Rechtsrichtung des Reinigungsroboters (100) ist.

9. Verfahren nach Anspruch 5, wobei eine vierte vorgegebene Distanz gleich der ersten vorgegebene Distanz ist.

10. Verfahren nach Anspruch 5, wobei, wenn die Reinigungsbreite der manuellen Reinigungsvorrichtung (600) größer als eine dritte vorgegebene Distanz ist, eine horizontale Länge des Gebiets als die Laufdistanz in der Links- und der Rechtsrichtung der manuellen Reinigungsvorrichtung (600) definiert wird und eine vertikale Länge des Gebiets als eine vierte vorgegebene Distanz definiert wird (S96).

11. Verfahren nach Anspruch 10, wobei, wenn die Reinigungsbreite der manuellen Reinigungsvorrichtung (600) größer als die dritte vorgegebene Distanz ist, der Reinigungsroboter (100) nach dem Reinigen eines Gebiets ein in einer vertikalen Richtung benachbartes nächstes Gebiet reinigt.

12. Verfahren nach Anspruch 1, wobei, wenn eine Distanz zwischen dem Reinigungsroboter (100) und der manuellen Reinigungsvorrichtung (600) größer als die zweite vorgegebene Distanz ist, eine Meldung für einen Benutzer erzeugt wird (S100).

13. Verfahren nach Anspruch 12, wobei die Meldung in der manuellen Reinigungsvorrichtung (600) erzeugt wird.

14. Verfahren nach Anspruch 12, wobei die Meldung in dem Reinigungsroboter (100) erzeugt wird.

15. Verfahren nach Anspruch 12, wobei, wenn die Distanz zwischen dem Reinigungsroboter (100) und der manuellen Reinigungsvorrichtung (600) größer als die zweite vorgegebene Distanz ist, sich der Reinigungsroboter (100) auf die manuelle Reinigungsvorrichtung (600) zu bewegt.

## Revendications

1. Procédé de commande d'un robot nettoyeur, le procédé comprenant :
une première opération (S10) d'identification du fait qu'un dispositif de nettoyage manuel (600) et le robot nettoyeur (100) sont allumés ;
une deuxième opération (S30) d'identification, par le robot nettoyeur (100), d'un emplacement du dispositif de nettoyage manuel (600) ;
une troisième opération (S40) de mouvement, par le robot nettoyeur (100), vers un emplacement à l'intérieur d'une première distance définie à partir du dispositif de nettoyage manuel (600) ; et
une quatrième opération d'arrêt (S70) du mouvement du robot nettoyeur (100) lorsque le robot nettoyeur (100) est situé au niveau de l'emplacement à l'intérieur de la première distance définie du dispositif de nettoyage manuel (600) alors que le dispositif de nettoyage manuel (600) est en mouvement, et de réalisation (S90), par le robot nettoyeur (100), d'un nettoyage lors du mouvement lorsque le robot nettoyeur (100) est situé au niveau d'un emplacement à l'intérieur d'une deuxième distance définie à partir du dispositif de nettoyage manuel (600).

2. Procédé selon la revendication 1, dans lequel la troisième opération comprend :
le calcul (S50) d'une trajectoire de mouvement et d'une largeur de nettoyage du dispositif de nettoyage manuel (600).

3. Procédé selon la revendication 2, dans lequel la trajectoire de mouvement du dispositif de nettoyage manuel (600) est un trajet de déplacement du dispositif de nettoyage manuel (600) alors que le dispositif de nettoyage manuel (600) est allumé et réalise un nettoyage.

4. Procédé selon la revendication 3, dans lequel la largeur de nettoyage du dispositif de nettoyage manuel (600) est une distance de déplacement dans des directions gauche et droite du dispositif de nettoyage manuel (600) alors que le dispositif de nettoyage manuel (600) est allumé et réalise le nettoyage.

5. Procédé selon la revendication 4, dans lequel la quatrième opération comprend :
la réalisation, par le robot nettoyeur (100), du nettoyage lors de son déplacement dans une région rectangulaire définie lorsque le robot nettoyeur (100) est situé au niveau de l'emplacement à l'intérieur de la deuxième distance définie à partir du dispositif de nettoyage manuel (600).

6. Procédé selon la revendication 5, dans lequel, lorsque la largeur de nettoyage du dispositif de nettoyage manuel (600) est inférieure à une troisième distance définie, une longueur horizontale de la région est définie comme la troisième distance définie et une longueur verticale de la région est définie comme une quatrième distance définie (S94).

7. Procédé selon la revendication 6, dans lequel, lorsque la largeur de nettoyage du dispositif de nettoyage manuel (600) est inférieure à une troisième distance définie, après le nettoyage d'une région, le robot nettoyeur (100) nettoie une prochaine région adjacente dans une direction horizontale.

8. Procédé selon la revendication 5, dans lequel une troisième distance définie est la même largeur qu'une largeur dans les directions gauche et droite du robot nettoyeur (100).

9. Procédé selon la revendication 5, dans lequel une quatrième distance définie est la même que la première distance définie.

10. Procédé selon la revendication 5, dans lequel la largeur de nettoyage du dispositif de nettoyage manuel (600) est supérieure à une troisième distance définie, une longueur horizontale de la région est définie comme la distance de déplacement dans les directions gauche et droite du dispositif de nettoyage manuel (600) et une longueur verticale de la région est définie comme une quatrième distance définie (S96).

11. Procédé selon la revendication 10, dans lequel, lorsque la largeur de nettoyage du dispositif de nettoyage manuel (600) est supérieure à la troisième distance définie, après le nettoyage d'une région, le robot nettoyeur (100) nettoie une prochaine région adjacente dans une direction verticale.

12. Procédé selon la revendication 1, dans lequel, lorsqu'une distance entre le robot nettoyeur (100) et le dispositif de nettoyage manuel (600) est supérieure à la deuxième distance définie, une notification est générée pour un utilisateur (S 1 00).

13. Procédé selon la revendication 12, dans lequel la notification est générée dans le dispositif de nettoyage manuel (600).

14. Procédé selon la revendication 12, dans lequel la notification est générée dans le robot nettoyeur (100).

15. Procédé selon la revendication 12, dans lequel, lorsque la distance entre le robot nettoyeur (100) et le dispositif de nettoyage manuel (600) est supérieure à la deuxième distance définie, le robot nettoyeur (100) bouge en direction du dispositif de nettoyage manuel (600).
